# EUROPEAN PATENT SPECIFICATION

(11) **EP 4 288 258 B1**
(45) Date of publication and mention of the grant of the patent: **08.04.2026**
(21) Application number: 22750112.9
(22) Date of filing: 31.01.2022
(51) Int. Cl.: B27C 3/06, F16B 12/12, B27C 3/02, B27C 3/04, B27F 4/00, B27M 3/00, B27M 3/18

(54) **ARRANGEMENTS FOR PREPARING OF FURNITURE PRODUCT**
ANORDNUNGEN ZUR HERSTELLUNG EINES MÖBELPRODUKTS
AGENCEMENTS DE PRÉPARATION D'UN PRODUIT DE MOBILIER

(30) Priority: 02.02.2021 SE 2150114
(43) Date of publication of application: 13.12.2023
(73) Proprietor: Välinge Innovation AB, 263 64 Viken (SE)
(72) Inventor: DERELÖV, Peter, 252 84 Helsinborg (SE); SVENSSON, Johan, 254 70 Kattarp (SE)
(74) Representative: Välinge Innovation AB
(86) International application number: PCT/SE2022/050101
(87) International publication number: WO 2022/169390

(56) References cited:
- EP-A1- 2 223 761
- EP-A2- 0 875 346
- DE-A1- 10 318 875
- IT-A1- MI20 082 167
- JP-B2- 3 738 022
- US-A- 4 834 153
- US-A- 5 276 953
- US-A1- 2018 187 707

## Description

### TECHNICAL FIELD

The present disclosure relates to tool arrangements for preparation or manufacture of furniture products. In particular the present disclosure relates to tool arrangements for preparing a building element with a means for attachment and/or locking to further building elements. More in particular the present disclosure relates to tool arrangements for forming an insertion groove in a building element and inserting a means for attachment in the insertion groove.

### TECHNICAL BACKGROUND

Known arrangements, such as tool arrangements, for preparing building elements for a furniture product may typically comprise transversely oriented devices performing operations on a building element, such as a surface thereof, in a number of work stations.

Known systems are typically associated with drawbacks relating to, but not limited to, difficulties in obtaining acceptable tolerances, adequately applied adhesive means, and speed of manufacture.

As such, there is room for improvements in the technical field. Relevant prior art can be found in JP 3 738022 B which discloses the preamble of claim 1.

### SUMMARY

It is an object of the present disclosure to provide tool arrangements facilitating improved quality of furniture products.

It is an object of the present disclosure to provide tool arrangements facilitating precision of manufacture.

It is an object of the present disclosure to provide tool arrangements facilitating improved dimensional tolerances.

It is an object of the present disclosure to provide tool arrangements facilitating improved economy of manufacture.

It is an object of the present disclosure to provide tool arrangements facilitating speed of manufacture.

The invention is as defined in claim 1.

According to the invention, there is provided a tool arrangement for manufacture of a furniture product comprising a building element, such as a building panel. The tool arrangement includes a tool configuration configured to be displaced, such as linearly displaced, along a primary axis. The tool configuration comprises a drilling device comprising a drill configured to form an insertion groove in a surface of said building element by means of axial displacement along a longitudinal centre axis of the drill in a direction towards said building element. The tool configuration further comprises a dispenser device configured to dispense adhesive means into said insertion groove and an inserter device configured to arrange a locking means into the insertion groove. The longitudinal axis of the drill is arranged at an acute angle to said primary axis and/or surface. The tool arrangement further comprises a receiving surface for receiving the building element. The receiving surface is configured to receive a first surface of the building element.

The building element comprises a second surface opposite the first surface, wherein said surface is provided at an edge portion of the building element extending between the first surface and the second surface.

The tool configuration is configured to be displaced along the surface of the building element.

The drilling device may be configured to form an insertion groove in said surface of said building element by means of axial displacement along a longitudinal centre axis of the drill in a direction towards said surface.

In one embodiment, the inserter device is configured to arrange a locking means in said insertion groove by means of axial displacement of the inserter device along a longitudinal centre axis of the inserter device in a direction towards the said surface of the building element.

The inserter device may be arranged with an acute angle to said surface.

In one embodiment, the inserter device, the drilling device and the dispenser device are arranged side-by-side, substantially in a single plane, preferably a single plane parallel the receiving surface.

The drill may be arranged at an acute angle within the range of 15-75 degrees, within the range of 30-60 degrees or about 45 degrees.
in relation to the primary axis and/or the surface.

In one embodiment, the inserter device is configured to insert said locking means into the insertion groove at an acute angle within the range of 15-75 degrees, within the range of 30-60 degrees or about 45 degrees to the primary axis and/or the surface.

In an embodiment the drill is arranged with the same acute angle as the inserter device inserts said locking means into the insertion groove.

The longitudinal axis of the dispenser device may be arranged at an angle being perpendicular the primary axis x1 and/or the surface.

In one embodiment, the insertion groove is a circular hole.

In one embodiment, the locking means is a plug or a tongue, such as a flexible tongue.

The drilling device, the inserter device and the dispenser device may be arranged on linear guiding means extending along the primary axis.

In one embodiment, one or more of a centre axis of the drill, the longitudinal axis of inserter device, the longitudinal axis of and/or the direction of ejection of adhesive means of the dispenser device, are parallel or transverse the receiving surface.

The dispenser device may be configured to, from a distance, eject adhesive means to thereby inject adhesive into said insertion groove.

In one embodiment, the dispenser device is configured to inject adhesive into said insertion groove in a direction perpendicular the surface

In another embodiment the dispenser device is configured to inject adhesive into said insertion groove parallel to the receiving surface.

The tool configuration may be configured such that the drill forms an insertion groove, and the dispenser device injects adhesive into said groove without displacing the tool configuration along the primary axis.

In one embodiment, the drill is configured to form the insertion groove to extend into the building element at an acute angle to the surface, said angle in the range of 15-75 degrees, within the range of 30-60 degrees or about 45 degrees.

The arrangement may further comprise a second tool configuration, preferably arranged on linear guiding means, such as said linear guiding means.

In one embodiment, the second tool configuration is a reversed version, such as laterally reversed copy, of the first tool configuration.

### BRIEF DESCRIPTION OF THE DRAWINGS

These and other aspects, features and advantages of which embodiments of the disclosure are capable of, will be apparent and elucidated from the following description of embodiments of the present disclosure, reference being made to the accompanying drawings, in which
- FIG. 1A: shows a tool arrangement according to an illustrative embodiment.
- FIG. 1B: shows details of the embodiment of FIG. 1A.
- FIG. 1C: is an isometric view of the embodiment of FIG. 1A.
- FIG. 1D: shows details of the embodiment of FIG. 1C.
- FIG. 2: shows a tool arrangement according to an illustrative embodiment.
- FIG. 3A: shows a tool arrangement according to an illustrative embodiment.
- FIG. 3B: is an isometric view of the embodiment of FIG. 3A.
- FIG. 4A: shows a rotating tool of a tool configuration of the embodiment of FIG. 3A in engagement with a building element.
- FIG. 4B: shows details of the embodiment of FIG. 3A.
- FIG. 5A: shows a tool arrangement according to an illustrative embodiment.
- FIG. 5B: shows details of the embodiment of FIG. 5A.
- FIG. 6A: shows a tool arrangement according to an illustrative embodiment.
- FIG. 6B: shows details of the embodiment of FIG. 6A.
- FIG. 7A: shows an inserter of a tool configuration inserting locking means in a building element, according to an illustrative embodiment.
- FIG. 7B: is an isometric view of the embodiment of FIG. 7A.
- FIG. 8: shows a building element with an insertion groove and an insertion groove with an inserted locking means, according to an embodiment.
- FIG. 9: shows a building element with inserted locking means, according to an illustrative embodiment.

### DETAILED DESCRIPTION OF EMBODIMENTS

Specific embodiments of the disclosure will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the disclosure to those skilled in the art. The terminology used in the detailed description of the embodiments illustrated in the accompanying drawings is not intended to be limiting of the invention. In the drawings, like numbers refer to like elements.

The articles "a," "an," and "the" are used herein to refer to one or more than one (i.e., to at least one) of the grammatical object of the article. By way of example, "an element" means one element or more than one element.

As used herein, the term "about" means ±10% of the noted value. By way of example only, a composition comprising "about 45 degrees" could include from 40.5 degrees to 49.5 degrees.

The word "comprising" is used in a manner consistent with its open-ended meaning, that is, to mean that a given product or process can optionally also have additional features or elements beyond those expressly described. It is understood that wherever embodiments are described with the language "comprising," otherwise analogous embodiments described in terms of "consisting of" and/or "consisting essentially of" are also contemplated and within the scope of this disclosure.

The different aspects, alternatives and embodiments of the invention disclosed herein can be combined with one or more of the other aspects, alternatives and embodiments described herein. Two or more aspects can be combined.

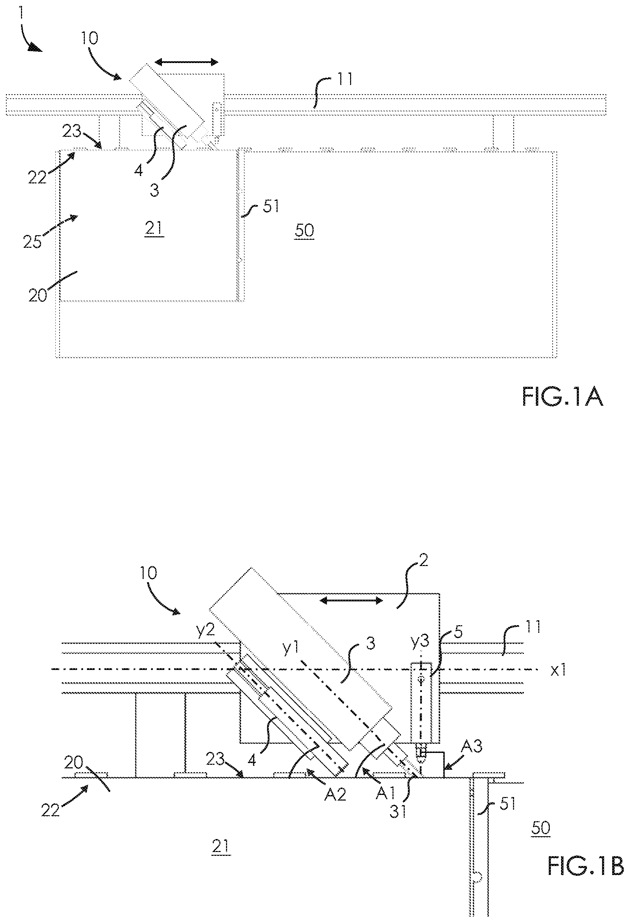

Referring to FIG. 1A, an exemplary embodiment of a tool arrangement 1 is shown. A building element 20, in this case a panel, is arranged on a receiving surface 50 of the arrangement 1. In some embodiments the arrangement may comprise guiding means 51, such as an aligning rail configured to assist in orienting and aligning the building element 20 on the receiving surface 50. In FIG. 1A, the building element 20 is arranged with a first surface 21, such as a main surface, facing away from the receiving surface 50 and with a second surface, such as a second main surface, facing towards the receiving surface, such as in direct abutment with the receiving surface 50. The building element 20 is thereby arranged with a first edge 22 facing in a direction towards linear guiding means 11, which may comprise a rail. The linear guiding means 11 extend along a primary axis x1 as shown in FIG. 1B. A first tool configuration 10 is displaceably arranged on the linear guiding means 11 to displace along the primary axis x1, for example by means of a motor.

In any embodiment the first edge 22 may comprise a third surface 23, such as an outer surface. However, the surface 23 may be provided anywhere on the building element 20, for example on the first surface 21 or the second surface 25. The third surface 23 may be provided by the first edge 22 between the first surface 21 and the second surface 25 as shown in FIG. 1A. In this disclosure, the third surface 23 may be referred to as the surface 23. The surface 23 may in any embodiment face in a direction towards the first tool configuration 10, such as transverse the receiving surface 50.

The first tool configuration 10 may comprise one or more of a rotatable tool device 3, an inserter device 4 and a dispenser device 5. According to embodiments of the disclosure, a rotatable tool device 3, an inserter device 4 and a dispenser device 5 are arranged side-by-side as shown in FIG. 1A, such as in a direction along the primary axis x1.

The rotatable tool device 3 includes a rotatable tool 31. In the illustrated embodiment the rotatable tool device 3 is a drilling device and the rotatable tool 31 is a drill, but the rotatable tool device may in other embodiments be another suitable rotatable tool device and the rotatable tool another suitable rotatable tool, such as other machining rotatable tool devices and tools.

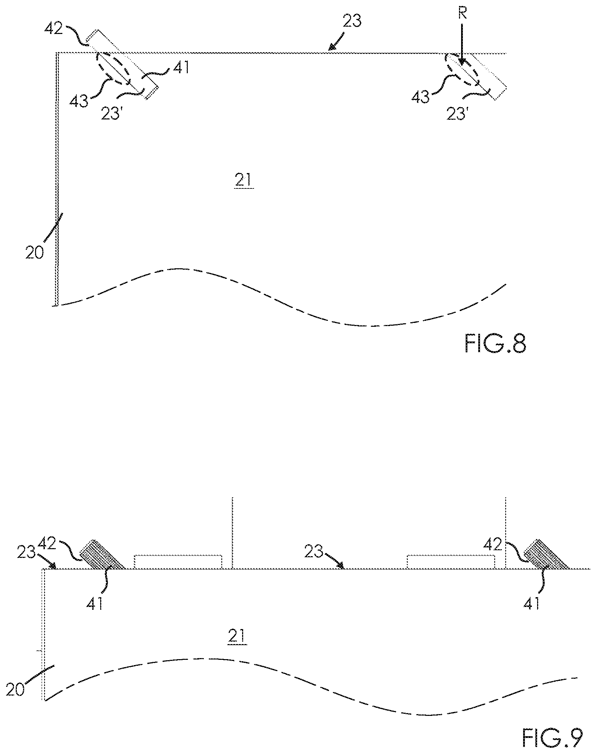

The rotatable tool has a center axis y1. The rotating tool 3 is configured to form an insertion groove 23' in the building element 20 (as shown for example in FIG. 8), such as by means of axial displacement of the rotatable tool 31 along the center axis y1 in a direction towards the surface 23. In the illustrated embodiment the rotatable tool 31 is arranged at an acute angle A1 to the surface 23, creating the insertion groove 23', which extends into the building element 20, with the acute angle A1. The angle A1 may preferably be in the range of 15-75 degrees, in the range of 30-60 degrees or about 45 degrees.

The dispenser device 5 is configured to dispense adhesive means, such as glue or the like, in the insertion groove 23', such as by means of injection, for example from a distance.

An advantage of creating the insertion groove 23' at an acute angle is that the adhesive, dispensed by the dispenser device 5, is distributed along the side of the insertion groove 23' and not just in the bottom of the insertion groove, as it would have done if the insertion groove 23' was created at an angle of about 90 degrees to the primary axis x1. The adhesive may then run down the sides of the insertion groove 23', which increases the area within the insertion groove covered by adhesive creating an increase adhesion area between the insertion groove 23' and the below described locking means 41.

Another advantage of having the rotatable tool device 3 with its rotatable tool 31 at an acute angle is that the insertion groove 23' and the dispensing of the adhesive by the dispenser device 5 is achieved without displacing the tool configuration in the primary axis x1. Once the rotatable tool 31 has created the insertion groove 23' it may be displaced along the center axis y1 away from the insertion groove and the dispenser device 5 is able to dispense the adhesive into the insertion groove 23' from its position, without being displaced.

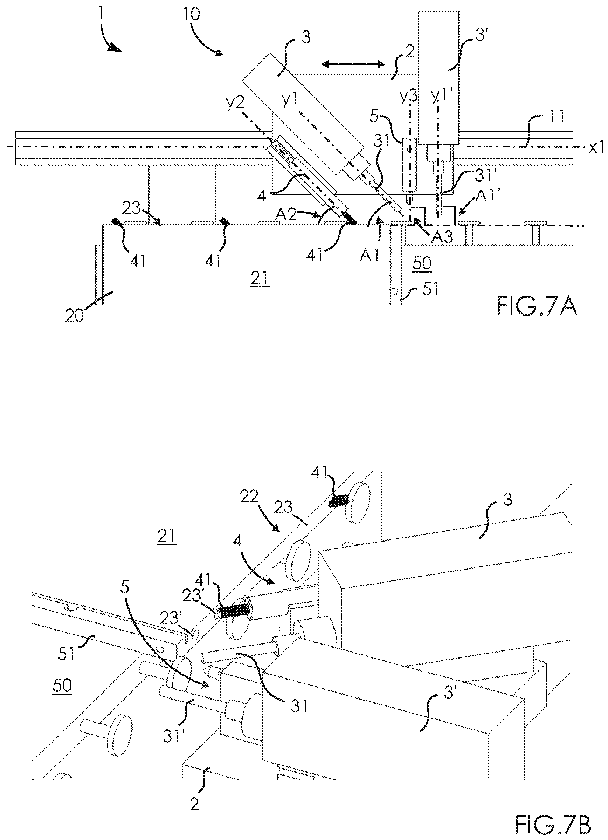

The inserter device 4 is configured to insert locking means 41 in the insertion groove 23' as shown in FIGS. 7A-7B. The locking means 41 may be a plug or a locking tongue, such as a flexible locking tongue. The locking means 41 may be a wood-based plug or a polymer-based plug. The locking means 41 may comprise friction means, such as ridges. The ridges may extend along the outer surface of the locking means 41, in a direction along the longitudinal axis of the locking means 41. The locking means 41 may be substantially cylindrical.

A longitudinal center axis of the locking means 41 is denoted y2. A longitudinal direction of the inserter device 4 may extend parallel the axis y2.

The inserter device 4 and the locking means 41 may preferably be arranged at an acute angle A2 to the surface 23, such that the locking means 41 are inserted into the insertion groove 23' at the acute angle A2. The angle A2 may preferably be in the range of 15-75 degrees, in the range of 30-60 degrees or about 45 degrees. The angle A2 is preferably the same as the acute angle A1 of the rotatable tool creating the insertion groove in which the locking means 41 are to be inserted.

The locking means 41 may be configured to cooperate with a corresponding groove in an adjacent building element of a furniture product to thereby lock the adjacent building elements in an assembled position.

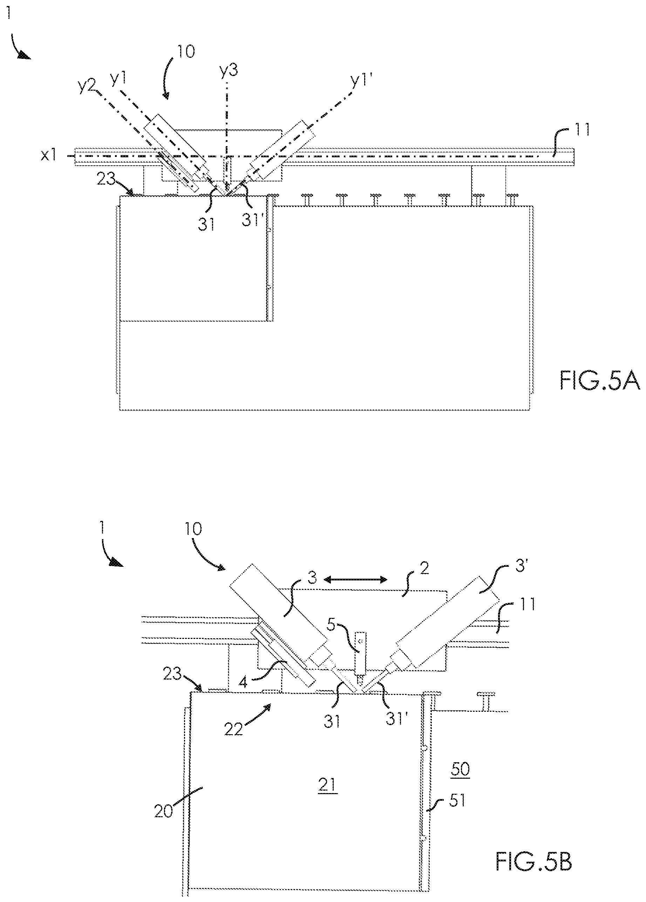

In an embodiment the locking means and the insertion groove may be included in a mechanical locking system as disclosed and shown in WO2020/046193, e.g. in Fig. 5B. The entire disclosure is hereby expressly incorporated by reference herein.

The first tool configuration 10 may comprise means 2 for connecting one or more of the rotatable tool device 3, the inserter device 4 and the dispenser device 5 to the linear guiding means 11. For example, said means 2 may comprise an assembly platform or the like.

FIG. 1B is detailed view of the embodiment of FIG. 1A. As an ordinarily skilled artisan would readily understand from FIG. 1B the center axis y1 of the rotatable tool 31 is arranged at an angle A1 to the surface 23. This configuration can allow for a technical advantage, namely that the dispenser device 5 may be arranged directly opposing the insertion groove 23'. In other words, the dispenser device 5 may dispense adhesive means in a direction transverse the surface 23 and parallel the receiving surface 50 and/or first surface 21.

A plane S extends transverse the surface 23 and parallel the primary axis x1. The angles A1, A1', A2, A2', A3, A3' may in any embodiment be measured in the plane S.

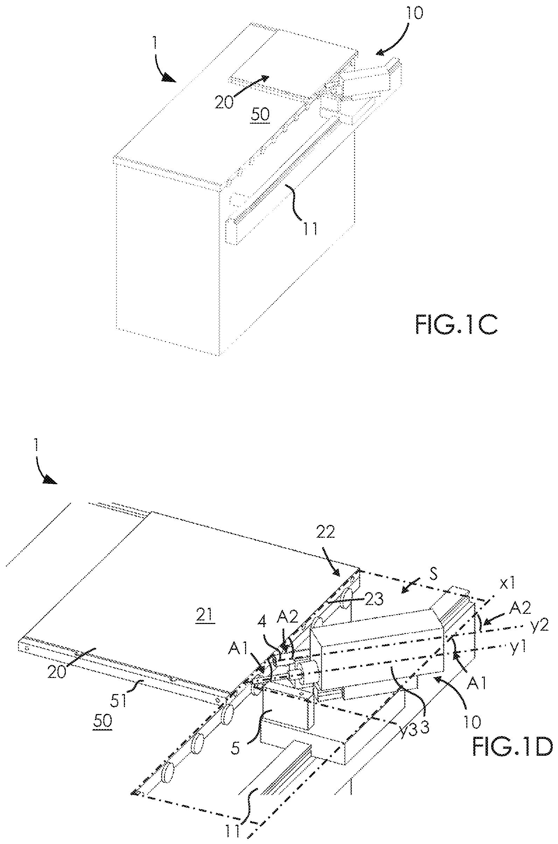

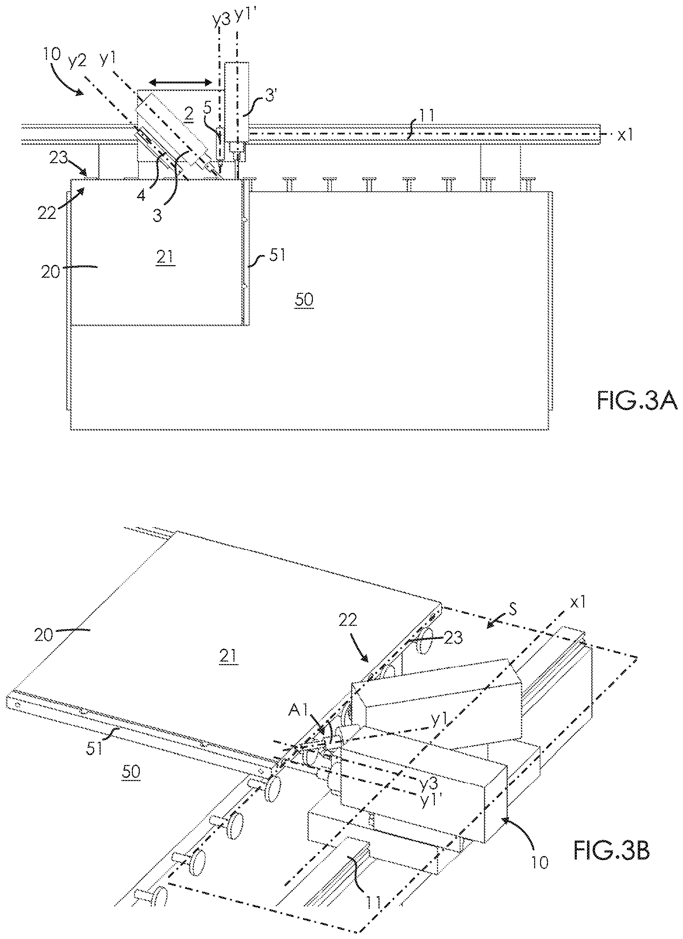

Additionally, as an ordinarily skilled artisan would readily understand from FIGS. 1D and 3B, by arranging the center axis y1 of the rotatable tool 31 at an angle A1 to the surface 23, the center axis y1 of the rotatable tool 31 and a nozzle of the dispenser device 5 may be arranged in the plane S being parallel to the receiving surface 50 and/or first surface and/or transverse the surface 23.

Additionally, the rotating tool device 3 for the insertion groove 23' and the dispenser device 5 may dispense adhesive means into the insertion groove 23' without displacing the first tool configuration 10.

The dispenser device 5 may dispense the adhesive means in a direction along an axis y3. The axis y3 may preferably be parallel to the plane S. This axis y3 may preferably by perpendicular to the primary axis x1 and/or the surface 23.

As an ordinarily skilled artisan would readily understand from FIG. 1B, the axis is configured with an angle A3 to the surface 23. The angle A3 may be 90 degrees.

As an ordinarily skilled artisan would readily understand from FIG. 1B and 7A, the axis y2 is arranged at an angle A2 to the surface 23.

The angle A1 may be in the range of 15-75 degrees, in the range of 30-60 degrees or about 45 degrees.

The angle A2 may be in the range of 15-75 degrees, in the range of 30-60 degrees or about 45 degrees.

The angle A2 of the inserter device may preferably be the same or substantially the same as the angle A1 of the rotatable tool 31. Thus, the angle A2 in which the locking means 41 is inserted into the insertion groove 23' is the same or substantially the same as the angle A1 as the insertion groove 23' is created.

In FIG. 1C an exemplary work station comprising a tool arrangement 1 is shown. Thus, the tool arrangement 1 may form part of a production line. It is emphasized that although the exemplary embodiments show a building element in shape of a panel with a second surface 25 facing the receiving surface 50, the building element may have other orientations within the scope of the disclosure. For example, the building element may be vertically oriented, and the tool configuration configured to form an insertion groove in a main surface, such as the first surface 21.

FIG. 1D shows a detailed view of the embodiment of FIGS. 1A-1C. As an ordinarily skilled artisan would readily understand from FIG. 1D, the rotating tool 3, the inserter device 4 and the dispenser device 5 are arranged next to each other in the plane S and in consecutive order. The rotating tool 3 and the inserter device 4 are angled about 45 degrees to the surface 23 whereas the dispenser device is arranged perpendicular the surface 23, whereby the dispenser device may dispense adhesive means directly after the insertion groove 23' has been formed, without the tool configuration 10 being displaced. Moreover, the dispenser means may dispense adhesive means in a desired area of the insertion groove 23', as further illustrated in FIG. 8.

The surface 23 of the building panel 20 may in any embodiment be an outer surface. It should be appreciated that in this disclosure when reference is made to forming of an insertion groove in a surface, it entails that the insertion groove will extend from the surface and into the building element 20.

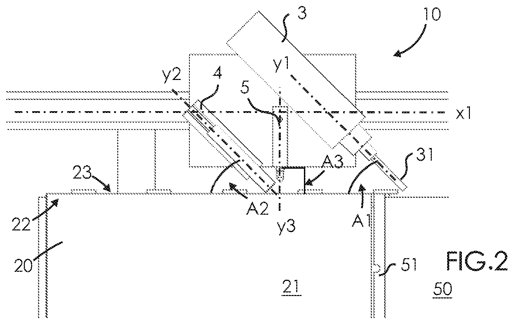

A tool configuration 10 wherein the dispenser device 5 is provided between the inserter device 4 and the rotating tool 5 is shown in FIG. 2. The inserter device 4, the dispenser device 5 and the rotating tool 5 are arranged side-by-side. In this embodiment the rotating tool 5 may in a first position of the tool configuration 10 firstly form the insertion groove 23' whereby the tool configuration 10 is displaced to a second position, whereby the dispenser device 5 applies adhesive means into the insertion groove 23' and subsequently the inserter device 4 inserts a locking means, while still in the second position. The angles A1, A2 and A3 may correspond to those used in the embodiment of FIGS. 1A-1D.

A tool configuration 10 corresponding to the embodiment shown in FIGS. 1A-1D with a second rotating tool device 3' is shown in FIGS. 3A-3B. The first rotating tool device 3 and the second rotating tool device 3' are arranged on opposite sides of the dispenser device 5. The center axis y1' of the second rotating tool device 3' is configured to be substantially perpendicular the primary axis x1. The center axis y1' of the second rotating tool device 3' is configured to be substantially perpendicular to the surface 23. The center axis y1' of the second rotating tool device 3' may be configured to be substantially parallel to the first surface 21. The center axis y1' of the second rotating tool device 3' may be configured to be substantially parallel to the receiving surface 50.

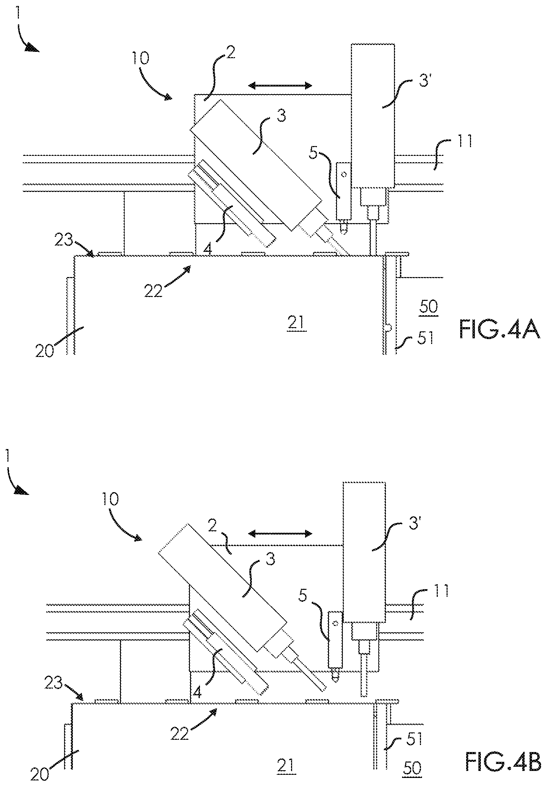

This configuration brings about the technical advantage that the first tool configuration 10 may form a first insertion groove 23' which extends into the building element 20. In the illustrated embodiment the first rotatable tool 31, as described above, is arranged at an acute angle A1 to the surface 23, creating the insertion groove 23', which extends into the building element 20, with the acute angle A1. The angle A1 may preferably be in the range of 15-75 degrees, in the range of 30-60 degrees or about 45 degrees. Further, the second rotatable tool 31' is arranged at a substantially right-angle to the surface 23, thus creating a second insertion groove which extends into the building element 20 with a right-angle to the surface 23 as illustrated in FIGS. 4A-4B. In FIG. 4A the first rotating tool device 3 and the second rotating tool device 3' are in engagement with the building element 20 to form the respective said insertion grooves.

FIG. 4B shows the first rotating tool device 3 and the second rotating tool device 3' when not in engagement with the building element 20.

A tool configuration 10 corresponding to the embodiment shown in FIGS. 4A-4B with the second rotating tool device 3' provided at an acute angle in the range of 15-75 degrees, in the range of 30-60 degrees or about 45 degrees, to the surface 23 is shown in FIGS. 5A-5B. The center axis y1 of the first rotatable tool 31 and the center axis y1' of the second rotatable tool 31' may be arranged perpendicular to each other.

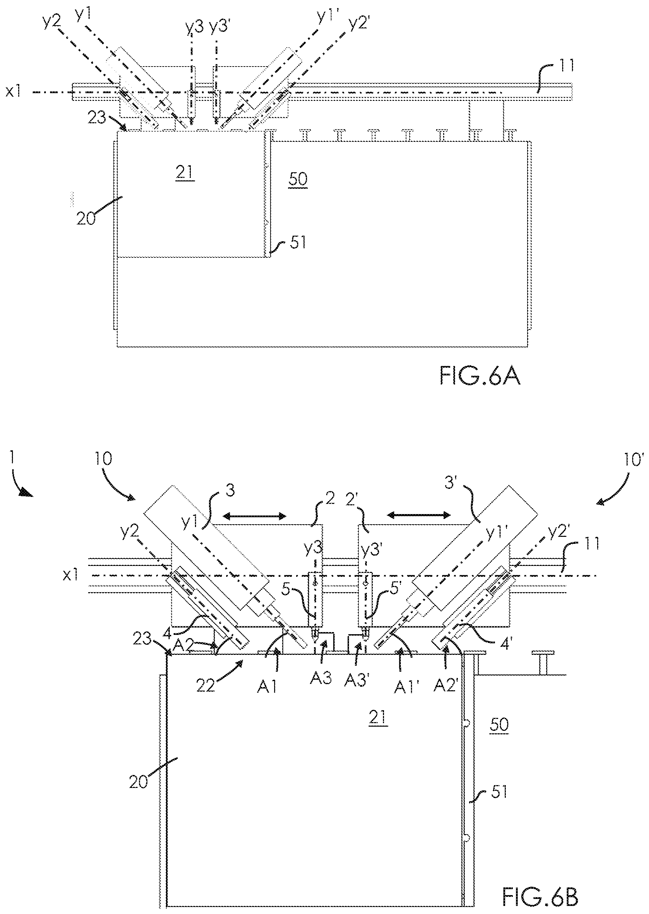

A tool arrangement 1 comprising a first tool configuration 10 and a second tool configuration 10' is shown in FIGS. 6A-6B.

The first tool configuration 10 may correspond to any embodiment of the first tool configuration disclosed herein. The second tool configuration 10' may be arranged on the same guiding means, such as linear guiding means 11, as the first tool configuration 10. The second tool configuration 10' may correspond to any embodiment of the first tool configuration 10 disclosed herein. The second tool configuration 10' may be a laterally inverted version of the first tool configuration 10, i.e., which mirrors the first tool configuration 10 about a plane orthogonal the receiving surface 50 and the surface 23 of the building element 20 as shown in FIGS. 6A-6B. The first and second tool configurations 10, 10' may be configured to displace independently along the primary axis x1 along the surface 23 of the building element 20. Thereby, both the first and second tool configuration 10, 10' may engage with the building element 20 simultaneously or for example the first tool configuration 10 may engage with the building element 20 arranged on the receiving surface 50 and the second tool configuration 10' may engage with a further building element (not shown) which may be provided on the receiving surface 50. Engaging entails the tool configuration 10, 10' one or more of forming an insertion groove, dispensing adhesive means into an insertion groove and inserting a locking means into an insertion groove. The first and second tool configurations 10, 10' may include the same type(s) of tool(s), or different type(s) of tool(s).

FIGS. 7A-7B shows an exemplary embodiment wherein a tool configuration 10, such as the tool configuration of FIGS. 3A-3B, engages with the building element 20 by inserting a locking means 41 into the insertion groove 23'.

FIG. 8 shows a schematic cross-sectional view of a building element 20 comprising two insertion grooves 23' formed in the surface 23. In the left-hand insertion groove 23' a locking means 41 has been inserted. FIG. 9 shows another view where locking means 41 has been inserted in the respective insertion grooves 23'. When such building element 20 is configured in assembled position with an adjacent building element, the locking means 41 can cooperate with respective insertion grooves of the adjacent building element. The adjacent building elements can form a furniture product in assembled position. A portion of the locking means facing the surface 23 can in assembled position form and function as a locking surface 42, which locks the building element 20 and the adjacent building element from parting away from each other. Consequently, the locking means may be urged to move in a direction transverse the surface 23 and thus pivot in a direction transverse the locking surface 42 away from the surface 23. Thereby, the locking means 41 may become loose and/or dislodge from the insertion groove 23'. Thus, it may be desired to provide adhesive means in a region 43 of the insertion groove 23' indicated in FIG. 8 which is located straight into the insertion groove 23' in a direction transverse the surface 23. By arranging the axis y1 of the rotatable tool 31 at an angle A1, such as about 45 degrees, to the surface 23 and the dispenser device 5 at an angle A3, such as about 90 degrees to the surface 23, as has been explained herein, the dispenser device 5 may dispense, such as shoot and/or inject adhesive means, such as glue, in a direction R being transverse the surface 23, transverse an opening of the insertion groove 23' and parallel the first surface 21. Thus, the dispenser device 5 may inject adhesive means from a position directly opposing the opening of the insertion groove 23'. Thereby, it is facilitated that the adhesive means is applied in the desired region 43 of the insertion groove 23'. Thereby, the locking means 41 can be secured in the insertion groove 23' and dislodging may be avoided.

## Claims

1. A tool arrangement for manufacture of a furniture product comprising a building element (20), such as a building panel, the tool arrangement comprising:
a tool configuration (10) configured to be displaced, such as linearly displaced, along a primary axis (x1) wherein the tool configuration (10) comprises:
a drilling device (3) comprising a drill (31) configured to form an insertion groove (23') in a surface (23) of said building element by means of axial displacement along a longitudinal centre axis (y1) of the drill (31) in a direction towards said building element (20),
a dispenser device (5) configured to dispense adhesive means into said insertion groove (23'), and
an inserter device (4) configured to arrange a locking means (41) in said insertion groove (23'),
wherein said longitudinal axis (y1) of the drill (31) is arranged with an acute angle (A1) to said primary axis (x1) and/or said surface (23),
wherein the tool arrangement comprises a receiving surface (50) for receiving a building element; wherein said receiving surface (50) is configured to receive a first surface (21) of the building element (20); the building element comprising a second surface (25) opposite the first surface (21); wherein said surface (23) is provided at an edge portion of the building element (20) extending between the first surface (21) and the second surface (25), **characterized by** that
the tool configuration (10) is configured to be displaced along the surface (23) of the building element (20).

2. The arrangement according to claim 1, wherein said inserter device (4) is arranged with an acute angle (A2) to said surface (23).

3. The arrangement according to claim 1 or 2, wherein the inserter device (4), the rotating tool (3) and the dispenser device (5) are arranged side-by-side, substantially in a single plane (S), preferably a single plane parallel to the receiving surface (50).

4. The arrangement according to any one of claims 1 to 3, wherein the drill (31) is arranged at an acute angle (A1) within the range of 15-75 degrees, within the range of 30-60 degrees, or about 45 degrees to the primary axis (x1) and/or the surface (23).

5. The arrangement according to any one of claims 1 to 4, wherein the inserter device (4) is configured to insert said locking means (41) into said insertion groove (23') at an acute angle within the range of 15-75 degrees, within the range of 30-60 degrees, or about 45 degrees to the primary axis (x1) and/or the surface (23).

6. The arrangement according to any one of claims 1 to 5, wherein the longitudinal axis (y3) of the dispenser device (5) is arranged at an angle (A3) being perpendicular to the primary axis (x1) and/or the surface (23).

7. The arrangement according to any one of the claims 1 to 6, wherein the tool configuration (10) comprises a means (2) for connecting one or more of the drilling device (3), the inserter device (4) and the dispenser device (5) to a linear guiding means (11).

8. The arrangement according to any one of claims 1 to 6, wherein the drilling device (3), the inserter device (4) and the dispenser device (5) are arranged on a linear guiding means (11) extending along the primary axis (x1).

9. The arrangement according to any one of claims 1 to 8, wherein the dispenser device is configured to inject adhesive into said insertion groove (23') in a direction perpendicular to the surface (23).

10. The arrangement according to any one of the claims 1 to 9, wherein the dispenser device is configured to inject adhesive into said insertion groove (23') in a direction parallel to the receiving surface (50).

11. The arrangement according to any one of claims 1 to 10, wherein the tool configuration (10) is a first tool configuration (10), and wherein the arrangement further comprises a second tool configuration (10'), preferably arranged on a linear guiding means.

12. The arrangement according to claim 11, wherein the second tool configuration (10') is arranged on a linear guiding means (11) on which the drilling device (3), the inserter device (4) and the dispenser device (5) are arranged, the linear guiding means (11) extending along the primary axis (x1).

13. The arrangement according to the preceding claim 11 or 12, wherein said second tool configuration (10') is an inverted version, such as a laterally inverted version, of the first tool configuration (10).

14. The arrangement according to any one of the claims 1 to 13, wherein the locking means (41) is a wood-based plug or a polymer-based plug.

15. The arrangement according to any one of the claims 1 to 13, wherein the locking means (41) is a tongue, such as a flexible locking tongue.

## Patentansprüche

1. Werkzeuganordnung für eine Herstellung eines Möbelprodukts, umfassend ein Bauelement (20), wie ein Baupaneel, die Werkzeuganordnung umfassend:
eine Werkzeugkonfiguration (10), die konfiguriert ist, um entlang einer Hauptachse (x1) verschoben, wie linear verschoben, zu werden, wobei die Werkzeugkonfiguration (10) umfasst:
eine Bohrvorrichtung (3), umfassend einen Bohrer (31), der konfiguriert ist, um eine Einführnut (23') in einer Oberfläche (23) des Bauelements mittels axialer Verschiebung entlang einer Längsmittelachse (y1) des Bohrers (31) in einer Richtung zu dem Bauelement (20) hin auszubilden,
eine Abgabevorrichtung (5), die konfiguriert ist, um Klebemittel in die Einführungsnut (23') abzugeben und
eine Einführvorrichtung (4), die konfiguriert ist, um ein Verriegelungsmittel (41) in der Einführnut (23') anzuordnen,
wobei die Längsachse (y1) des Bohrers (31) in einem spitzen Winkel (A1) zu der Hauptachse (x1) und/oder der Oberfläche (23) angeordnet ist,
wobei die Werkzeuganordnung eine Aufnahmeoberfläche (50) zum Aufnehmen eines Bauelements umfasst; wobei die Aufnahmeoberfläche (50) konfiguriert ist, um eine erste Oberfläche (21) des Bauelements (20) aufzunehmen; das Bauelement umfassend eine zweite Oberfläche (25) gegenüber der ersten Oberfläche (21); wobei die Oberfläche (23) an einem Randabschnitt des Bauelements (20) bereitgestellt ist, der sich zwischen der ersten Oberfläche (21) und der zweiten Oberfläche (25) erstreckt, **dadurch gekennzeichnet, dass**
die Werkzeugkonfiguration (10) konfiguriert ist, um entlang der Oberfläche (23) des Bauelements (20) verschoben zu werden.

2. Anordnung nach Anspruch 1, wobei die Einführvorrichtung (4) in einem spitzen Winkel (A2) zu der Oberfläche (23) angeordnet ist.

3. Anordnung nach Anspruch 1 oder 2, wobei die Einführvorrichtung (4), das Drehwerkzeug (3) und die Abgabevorrichtung (5) nebeneinander angeordnet sind, im Wesentlichen in einer einzigen Ebene (S), vorzugsweise einer einzigen Ebene parallel zu der Aufnahmeoberfläche (50).

4. Verwendung nach einem der Ansprüche 1 bis 3, wobei der Bohrer (31) in einem spitzen Winkel (A1) innerhalb des Bereichs von 15-75 Grad, innerhalb des Bereichs von 30-60 Grad oder etwa 45 Grad zu der Hauptachse (x1) und/oder der Oberfläche (23) angeordnet ist.

5. Anordnung nach einem der Ansprüche 1 bis 4, wobei die Einführvorrichtung (4) konfiguriert ist, um das Verriegelungsmittel (41) in die Einführnut (23') in einem spitzen Winkel innerhalb des Bereichs von 15-75 Grad, innerhalb des Bereichs von 30-60 Grad oder etwa 45 Grad zu der Hauptachse (x1) und/oder der Oberfläche (23) einzuführen.

6. Anordnung nach einem der Ansprüche 1 bis 5, wobei die Längsachse (y3) der Abgabevorrichtung (5) in einem Winkel (A3) angeordnet ist, der senkrecht zu der Hauptachse (x1) und/oder der Oberfläche (23) steht.

7. Anordnung nach einem der Ansprüche 1 bis 6, wobei die Werkzeugkonfiguration (10) ein Mittel (2) zum Verbinden eines oder mehrerer der Bohrvorrichtung (3), der Einführvorrichtung (4) und der Abgabevorrichtung (5) mit einem linearen Führungsmittel (11) umfasst.

8. Anordnung nach einem der Ansprüche 1 bis 6, wobei die Bohrvorrichtung (3), die Einführvorrichtung (4) und die Abgabevorrichtung (5) an einem linearen Führungsmittel (11) angeordnet sind, das sich entlang der Hauptachse (x1) erstreckt.

9. Anordnung nach einem der Ansprüche 1 bis 8, wobei die Abgabevorrichtung konfiguriert ist, um Klebstoff in die Einführungsnut (23') in einer Richtung senkrecht zu der Oberfläche (23) einzuspritzen.

10. Anordnung nach einem der Ansprüche 1 bis 9, wobei die Abgabevorrichtung konfiguriert ist, um Klebstoff in die Einführnut (23') in einer Richtung parallel zu der Aufnahmeoberfläche (50) einzuspritzen.

11. Anordnung nach einem der Ansprüche 1 bis 10, wobei die Werkzeugkonfiguration (10) eine erste Werkzeugkonfiguration (10) ist, und wobei die Anordnung ferner eine zweite Werkzeugkonfiguration (10') umfasst, vorzugsweise angeordnet an einem linearen Führungsmittel.

12. Anordnung nach Anspruch 11, wobei die zweite Werkzeugkonfiguration (10') an einem linearen Führungsmittel (11) angeordnet ist, an dem die Bohrvorrichtung (3), die Einführvorrichtung (4) und die Abgabevorrichtung (5) angeordnet sind, wobei sich das lineare Führungsmittel (11) entlang der Hauptachse (x1) erstreckt.

13. Anordnung nach dem vorstehenden Anspruch 11 oder 12, wobei die zweite Werkzeugkonfiguration (10') eine invertierte Version, wie eine seitlich invertierte Version, der ersten Werkzeugkonfiguration (10) ist.

14. Anordnung nach einem der Ansprüche 1 bis 13, wobei das Verriegelungsmittel (41) ein holzbasierter Stopfen oder ein polymerbasierter Stopfen ist.

15. Anordnung nach einem der Ansprüche 1 bis 13, wobei das Verriegelungsmittel (41) eine Zunge, wie eine flexible Verriegelungszunge, ist.

## Revendications

1. Agencement d'outil destiné à la fabrication d'un produit d'ameublement comprenant un élément de construction (20), tel qu'un panneau de construction, l'agencement d'outil comprenant :
une configuration d'outil (10) conçue pour être déplacée, telle que déplacée linéairement, le long d'un axe primaire (x1) dans lequel la configuration d'outil (10) comprend :
un dispositif de forage (3) comprenant un foret (31) conçu pour former une rainure d'insertion (23') dans une surface (23) dudit élément de construction au moyen d'un déplacement axial le long d'un axe central longitudinal (y1) du foret (31) dans une direction allant vers ledit élément de construction (20),
un dispositif distributeur (5) conçu pour distribuer un moyen adhésif dans ladite rainure d'insertion (23'), et
un dispositif d'insertion (4) conçu pour agencer un moyen de verrouillage (41) dans ladite rainure d'insertion (23'),
dans lequel ledit axe longitudinal (y1) du foret (31) est agencé avec un angle aigu (A1) par rapport audit axe primaire (x1) et/ou à ladite surface (23),
dans lequel l'agencement d'outil comprend une surface de réception (50) permettant de recevoir un élément de construction ; dans lequel ladite surface de réception (50) est conçue pour recevoir une première surface (21) de l'élément de construction (20) ; l'élément de construction comprenant une seconde surface (25) opposée à la première surface (21) ; dans lequel ladite surface (23) est fournie au niveau d'une portion de bord de l'élément de construction (20) s'étendant entre la première surface (21) et la seconde surface (25), **caractérisé en ce que**
la configuration d'outil (10) est conçue pour être déplacée le long de la surface (23) de l'élément de construction (20).

2. Agencement selon la revendication 1, dans lequel ledit dispositif d'insertion (4) est agencé avec un angle aigu (A2) par rapport à ladite surface (23).

3. Agencement selon la revendication 1 ou 2, dans lequel le dispositif d'insertion (4), l'outil rotatif (3) et le dispositif distributeur (5) sont agencés côte à côte, sensiblement dans un plan unique (S), de préférence un plan unique parallèle à la surface de réception (50).

4. Agencement selon l'une quelconque des revendications 1 à 3, dans lequel le foret (31) est
agencé selon un angle aigu (A1) dans la plage de 15 à 75 degrés, dans la plage de 30 à 60 degrés, ou à environ 45 degrés par rapport à l'axe primaire (x1) et/ou à la surface (23).

5. Agencement selon l'une quelconque des revendications 1 à 4, dans lequel le dispositif d'insertion (4) est conçu pour insérer ledit moyen de verrouillage (41) dans ladite rainure d'insertion (23') selon un angle aigu dans la plage de 15 à 75 degrés, dans la plage de 30 à 60 degrés, ou à environ 45 degrés par rapport à l'axe primaire (x1) et/ou à la surface (23).

6. Agencement selon l'une quelconque des revendications 1 à 5, dans lequel l'axe longitudinal (y3) du dispositif distributeur (5) est agencé selon un angle (A3) étant perpendiculaire à l'axe primaire (x1) et/ou à la surface (23).

7. Agencement selon l'une quelconque des revendications 1 à 6, dans lequel la configuration d'outil (10) comprend un moyen (2) permettant de relier un ou plusieurs parmi le dispositif de forage (3), le dispositif d'insertion (4) et le dispositif distributeur (5) à un moyen de guidage linéaire (11).

8. Agencement selon l'une quelconque des revendications 1 à 6, dans lequel le dispositif de forage (3), le dispositif d'insertion (4) et le dispositif distributeur (5) sont agencés sur un moyen de guidage linéaire (11) s'étendant le long de l'axe primaire (x1).

9. Agencement selon l'une quelconque des revendications 1 à 8, dans lequel le dispositif distributeur est conçu pour injecter un adhésif dans ladite rainure d'insertion (23') dans une direction perpendiculaire à la surface (23).

10. Agencement selon l'une quelconque des revendications 1 à 9, dans lequel le dispositif distributeur est conçu pour injecter un adhésif dans ladite rainure d'insertion (23') dans une direction parallèle à la surface de réception (50).

11. Agencement selon l'une quelconque des revendications 1 à 10, dans lequel la configuration d'outil (10) est une première configuration d'outil (10), et dans lequel l'agencement comprend en outre une seconde configuration d'outil (10'), agencée de préférence sur un moyen de guidage linéaire.

12. Agencement selon la revendication 11, dans lequel la seconde configuration d'outil (10') est agencée sur un moyen de guidage linéaire (11) sur lequel le dispositif de forage (3), le dispositif d'insertion (4) et le dispositif distributeur (5) sont agencés, le moyen de guidage linéaire (11) s'étendant le long de l'axe primaire (x1).

13. Agencement selon la revendication 11 ou 12 précédente, dans lequel ladite seconde configuration d'outil (10') est une version inversée, telle qu'une version latéralement inversée, de la première configuration d'outil (10).

14. Agencement selon l'une quelconque des revendications 1 à 13, dans lequel le moyen de verrouillage (41) est un bouchon à base de bois ou un bouchon à base de polymère.

15. Agencement selon l'une quelconque des revendications 1 à 13, dans lequel le moyen de verrouillage (41) est une languette, telle qu'une languette de verrouillage flexible.
